# EUROPÄISCHE PATENTSCHRIFT

(11) **EP 3 207 600 B1**
(45) Veröffentlichungstag und Bekanntmachung des Hinweises auf die Patenterteilung: **30.01.2019**
(21) Anmeldenummer: 15808328.7
(22) Anmeldetag: 15.10.2015
(51) Int. Cl.: H01R 43/28

(54) **KABELSEQUENZ FÜR EINE VERDRAHTUNG EINER ELEKTRISCHEN SCHALTUNG, VERFAHREN ZUM HERSTELLEN SOWIE VERWENDUNG**
CABLE SEQUENCE FOR A WIRING OF AN ELECTRICAL CIRCUIT, METHOD FOR PRODUCTION AND USE
SÉQUENCE DE CÂBLES POUR LE CÂBLAGE D'UN CIRCUIT ÉLECTRIQUE, PROCÉDÉ DE FABRICATION ET UTILISATION

(30) Priorität: 15.10.2014 DE 102014114937; 17.11.2014 DE 102014116772; 10.03.2015 DE 102015103444
(43) Veröffentlichungstag der Anmeldung: 23.08.2017
(73) Patentinhaber: Rittal GmbH & Co. KG, 35745 Herborn (DE)
(72) Erfinder: WURM, Kersten, 63128 Dietzenbach (DE); VON KIESLING, Jens, 64853 Otzberg (DE)
(74) Vertreter: Angerhausen, Christoph
(86) Internationale Anmeldenummer: PCT/DE2015/100427
(87) Internationale Veröffentlichungsnummer: WO 2016/058597

(56) Entgegenhaltungen:
- DE-U1- 29 721 028
- US-A- 3 155 136
- US-A- 4 347 651

## Beschreibung

Die Erfindung betrifft eine Kabelsequenz für eine Verdrahtung einer elektrischen Schaltung gemäß dem Oberbegriff des Anspruchs 1, ein Verfahren zum Herstellen gemäß dem Anspruch 13 sowie die Verwendung der Kabelsequenz gemäß dem Anspruch 14. Eine entsprechende Kabelsequenz ist aus der US 4,347,651 A bekannt. Eine ähnliche Kabelsequenz zeigt auch die US 3,155,136 A.

### Hintergrund

Das automatische Verlegen und Verdrahten von Kabeln einer elektrischen Schaltung ist in vielen Bereichen erwünscht, beispielsweise bei der Montage einer Schaltanlage oder in einem Schaltschrank zur Energieverteilung. Im Markt sind Kabelkonfektionsautomaten erhältlich, beispielsweise der unter dem Namen KOMAX ZETA bekannte Automat, der beispielsweise von der Komax Deutschland GmbH, Nürnberg, Bundesrepublik Deutschland, vertrieben wird. Die konfektionierten Kabel müssen dann so organisiert werden, dass sie letztlich zur Schaltanlage gelangen und dort zweckbestimmt in die elektrische Schaltung integriert werden.

Es ist üblich, die konfektionierten Kabel zu bündeln, so dass sie später zur Verdrahtung ausgewählt, dem Bündel entnommen und an die elektrische Schaltung gebracht werden können. Hierzu müssen Vorratsbehälter bereitgestellt werden, auch ist es schwierig, übermäßig lange Kabel zu behandeln. Im Dokument DE 43 21 007 A1 wird vorgeschlagen, eine Kabelrolle, die also ein Kabel mit einheitlichem Leitungsquerschnitt und einer Leitungsisolation mit einheitlichen Eigenschaften umfasst, so zu bearbeiten, dass diese an vorgesehenen Stellen entsprechend einer gewünschten Kabellänge abisoliert und der blanke Leiter ultraschallkompaktiert wird, wobei gegebenenfalls die Leitungsisolation gestaucht wird. Zuletzt wird die abisolierte Stelle mit einer Kerbe versehen, um den Anwender eine Sollbruchstelle zu markieren. Die Trennung in vereinzelte Kabel muss jedoch manuell erfolgen. Hierbei ergibt sich schon dadurch eine erhebliche Vereinfachung der Verdrahtung, dass die Sequenz der derart konfektionierten Kabel so gewählt werden kann, dass die Kabel in einer Montagereihenfolge miteinander verbunden sind. Bei der bekannte Kabelsequenz und dem bekannten Verfahren zum Erzeugen und Behandeln einer solchen Kabelsequenz ist die Verwendung einer einheitlichen Kabelrolle in der Vorbereitung zur Verdrahtung vorgesehen.

In dem Dokument US 3,155,136 sind ein Verfahren und eine Vorrichtung zum Herstellen von Drahtverbinderanordnungen offenbart.

Im Dokument US 6,865,796 B1 ist ein Verfahren zum Verdünnen eines Drahtabschnitts offenbart, indem insbesondere die Isolierung entfernt wird, um so einen Trenn- oder Schnittbereich zum anschließenden Durchtrennen bereitzustellen.

Das Dokument DE 33 27 583 A1 betrifft ein Verfahren zum Herstellen von Kabelbäumen, wobei hierbei Einzelleiter von einem Kabel abgelängt, abisoliert und mit Steckern versehen werden. Die vorgefertigten Einzelleiter werden anschließend zum Kabelbaum zusammengefasst.

Im Dokument EP 0 143 936 A1 ist eine Vorrichtung zum Verbinden oder Verdichten elektrische Leiter beschrieben. Um elektrische Leiter wie Litzen mittels Ultraschall zu verdichten oder zu einem Knotenpunkt zu verschweißen, wird vorgeschlagen, dass die Sonotrode einer Ultraschweißvorrichtung zentral ober- oder unterhalb der Sonotrodenlängsachse eine Fläche aufweist, der eine Fläche eines Ambosses zur oberen und unteren Begrenzung eines für den Leiter bestimmten Verdichtungsraums zugeordnet ist.

Das Dokument US 4,646,323 betrifft ein Verfahren und eine Vorrichtung zum Herstellen von seriell miteinander verbundenen Kabeln aus Streifen von flachen Mehrfachleitern.

Im Dokument DE 302 02 330 ist eine Vorrichtung zum selbsttätigen Vorbereiten einer Reihe von elektrischen Leiterabschnitten und zum Einstecken des Endes der Abschnitte in ein Gehäuse offenbart.

Das Dokument DE 297 21 028 U1 beschreibt durch lösbare Verbindungselemente kettenförmig verbundene Kabelsegmente, die eine Kabelsequenz bilden. Dabei berühren sich die mit dem Verbindungselement verbundenen jeweiligen Kabelenden nicht.

### Zusammenfassung

Es ist daher die Aufgabe der Erfindung, eine Kabelsequenz für eine Verdrahtung einer elektrischen Schaltung, ein Verfahren zum Herstellen sowie eine Verwendung zu schaffen, die das Bereitstellen anwendungsspezifischer Kabelsequenzen und deren effizienten Einsatz beim Verdrahten unterstützen.

Zur Lösung der Aufgabe ist eine Kabelsequenz für eine Verdrahtung einer elektrischen Schaltung nach dem unabhängigen Anspruch 1 geschaffen. Ein Verfahren zum Herstellen sowie die Verwendung sind Gegenstand der Ansprüche 13 und 14. Ausgestaltungen sind Gegenstand von abhängigen Unteransprüchen.

Nach einem Aspekt ist eine Kabelsequenz für eine Verdrahtung einer elektrischen Schaltung vorgesehen, die eine Reihenanordnung einer Vielzahl konfektionierter Kabel aufweist. Die konfektionierten Kabel weisen jeweils ein erstes und ein zweites Kabelende auf, das dem ersten Kabelende gegenüber liegt. Jedes der konfektionierten Kabel weist einen Leiter und eine Leiterisolierung auf. Die Kabelenden sind für die Verdrahtung einer elektrischen Schaltung bearbeitet, derart, dass ein jeweiliges Leiterende am ersten Kabelende und am zweiten Kabelende isolationsfrei ist. In der Reihenanordnung sind zwischen benachbart zueinander angeordneten konfektionierten Kabeln Verbindungen hergestellt. Mittels der Verbindungen sind jeweils ein zuvor als loses Kabelende hergestelltes erstes Kabelende eines konfektionierten Kabels und ein zuvor als loses Kabelende hergestelltes zweites Kabelende eines in der Reihenanordnung hierauf folgenden konfektionierten Kabels miteinander verbunden. Die Kabelsequenz zeichnet sich dadurch aus, dass in der Verbindung das erste und das zweite Kabelende in Längsrichtung der Kabel einander überlappend angeordnet sind.

Nach einem weiteren Aspekt ist ein Verfahren zum Herstellen einer Kabelsequenz für eine Verdrahtung einer elektrischen Schaltung geschaffen, welches die folgenden Schritte aufweist: Bereitstellen einer Vielzahl vereinzelter konfektionierter Kabel, die jeweils ein erstes und ein zweites Kabelende, das dem ersten Kabelende gegenüber liegt, aufweisen, wobei jedes der konfektionierten Kabel einen Leiter und eine Leiterisolierung aufweist und wobei die Kabelenden für die Verdrahtung einer elektrischen Schaltung bearbeitet sind, derart, dass ein jeweiliges Leiterende am ersten Kabelende und am zweiten Kabelende isolationsfrei ist; und Herstellen einer Kabelsequenz mit einer Reihenanordnung von konfektionierten Kabeln aus der Vielzahl vereinzelter konfektionierter Kabel, indem Verbindungen zwischen in der Reihenanordnung benachbart zueinander angeordneten konfektionierten Kabeln hergestellt werden, derart, dass mittels der Verbindungen jeweils ein zuvor als loses Kabelende hergestelltes erstes Kabelende eines konfektionierten Kabels und ein zuvor als loses Kabelende hergestelltes zweites Kabelende eines in der Reihenanordnung hierauf folgenden konfektionierten Kabels in Längsrichtung der Kabel einander überlappend miteinander verbunden werden.

Weiterhin ist die Verwendung einer Kabelsequenz zum Verdrahten einer elektrischen Schaltung vorgesehen, wobei hierbei die Verbindungen zwischen den benachbarten konfektionierten Kabeln in der Reihenanordnung getrennt werden und die elektrische Schaltung mit den getrennten konfektionierten Kabeln verdrahtet wird.

Die konfektionierten Kabel können vorab als Einzelkabel oder in Gruppen von vereinzelten Kabeln mit jeweiliger Konfektionierung hergestellt werden, um die Einzelkabel dann zur Kabelsequenz zu verbinden.

Die für das Verdrahten konfektionierte oder hergerichtete Kabelsequenz ist mit zuvor konfektionierten und vereinzelten Kabeln gebildet, wobei zum Ausbilden der Kabelsequenz lose Kabelenden der konfektionierten Kabel miteinander verbunden werden, so dass eine Reihenanordnung einer Vielzahl konfektionierter Kabel hergestellt ist.

Es kann vorgesehen sein, das erste und das zweite Kabelende frei von jeglicher Art von Kabelschuh und / oder frei von einer Endbearbeitung bereitzustellen. So kann eine kabelschuhfreie oder verbindungselementfreie Ausbildung der Kabelenden vorgesehen sein. Bei dieser oder anderen Ausführungen kann das Kabelende nach dem Abisolieren unbearbeitet bereitgestellt werden für das Ausbilden der Verbindungen in der Kabelsequenz.

Es kann vorgesehen sein, die abisolierten Kabelenden als kompaktierte Kabelenden auszuführen. Hierdurch werden verdichtete Aderenden bereitgestellt. Mittels Verdichtung (Kompaktierung) kann ein Kabelende mit exaktem Maß in Breite und Höhe sowie solider Haltbarkeit der verschweißten Einzellitzen zueinander bereitgestellt werden. So kann das Kompaktieren zum Beispiel nützlich sein hinsichtlich eines oder mehrerer der folgenden Aspekte: (i) Stecken von Leitungen ohne Aderendhülsen in Klemmen, (ii) Verhindern des Aufsplicens der Aderenden und (iii) Bereitstellen einer genau definierten zu verschweißenden Fläche und Höhe für einen nachfolgenden Schweißprozess, um die Prozess-Sicherheit der nachfolgenden Verbindung zu erhöhen und die Geometrie des Schweißwerkzeuges einfacher zu gestalten.

Zum Lagern, Speichern und / oder Transportieren der Kabelsequenz kann eine Speichereinrichtung genutzt werden, beispielsweise eine Kabelrolle, auf die die konfektionierte Kabelsequenz aufgewickelt ist.

Für das Übernehmen der konfektionierten Kabel von einem Kabelkonfektionsautomaten kann vorgesehen sein, dass die Art der auf die Kabelenden angewandte Aderendbearbeitung bekannt ist. Die Weiterverarbeitung durch den Kabelkonfektionsautomaten kann begrenzt sein auf abisolierte Kabel ohne Folgebehandlung, Kabel mit kompaktierten Leiterenden und / oder Kabel mit Aderendhülsen. Alternativ oder ergänzend können verzinnte Kabelenden vorgesehen sein.

Die Ausbildung oder Konfektionierung der Kabelenden für die Vielzahl von konfektionierten Kabeln, die in der Reihenanordnung der Kabelsequenz angeordnet sind, kann gleich oder verschieden sein.

Das erste und das zweite Kabelende können mittels der Verbindung lösbar miteinander verbunden sein. Alternativ können das erste und das zweite Kabelende nicht lösbar miteinander verbunden sein, zum Beispiel mittels Schweißen oder Löten. Kabelenden können zum Beispiel mittels Ultraschallschweißen nicht lösbar miteinander verbunden werden. Das nichtlösbare Verbinden bedeutet in einer Ausgestaltung insbesondere, dass die verbundenen Kabelenden mittels Schneiden oder Scheren zu trennen sind, wobei im Unterschied hierzu lösbar miteinander verbundene Kabelenden ohne Anwendung eines solchen oder eines anderer schneidender oder scherender Trennverfahrens wieder voneinander getrennt werden können, wenn die in der Kabelsequenz zusammengefassten konfektionierten Kabel für den Verdrahtungsprozess bereitgestellt werden sollen. Das Trennen der lösbaren Verbindung kann maschinell ausgeführt werden.

Es ist vorgesehen, dass das erste und das zweite Kabelende in Längsrichtung der Kabel einander überlappend angeordnet sind, sei es in einer lösbaren oder in einer nicht lösbaren Verbindung.

Das erste und das zweite Kabelende können in der Verbindung mittels eines Verbindungsbauteils miteinander verbunden sein, an welchem das erste und das zweite Kabelende in einer jeweils zugeordneten Aufnahme angeordnet sind. Das Verbindungsbauteil kann zum lösbaren Verbinden der Kabelenden dienen oder ergänzend zu einer nicht lösbaren Verbindung zwischen den Kabelenden verwendet werden. Das Verbindungsbauteil kann ein- oder mehrstückig ausgeführt sein. Zum Beispiel können zunächst zu verbindende Teile des Verbindungsbauteils mit einem jeweiligen Kabelende verbunden werden, um dann diese Teile zusammenzufügen, zum Beispiel mittels einer Steckverbindung, so dass schließlich die Kabel in die Kabelsequenz eingebunden werden. Verbindungsbauteile aus Kunststoff oder einem anderen Material können vorgesehen sein. Bei der Ausbildung des Verbindungsbauteils aus Kunststoff kann die Verwendung eines Spritzgussbauteils vorgesehen sein. In den verschiedenen Ausführungsformen kann die den Kabelenden jeweils zugeordnete Aufnahme als eine geschlossene oder eine offene Hülsenaufnahme gebildet sein. Beispielsweise kann sich die Aufnahmehülse zur Längsseite des Verbindungsbauteils hin öffnen. Auf diese Weise kann eine längsseitige Einführöffnung für das Kabelende bereitgestellt sein, zum Beispiel als Schlitzöffnung. Das Verbindungsbauteil kann als Klippbauteil ausgeführt sein, welches auf das erste und / oder das zweite Kabelende aufgeklippt wird.

Das Verbindungsbauteil kann ein wiederverwendbares Mehrwegbauteil sein. Alternativ kann vorgesehen sein, dass das Verbindungsbauteil als Einwegbauteil ausgeführt ist, welches nach dem Trennen des ersten und des zweiten Kabelendes nicht wiederverwendbar und daher zu entsorgen ist.

Das erste und das zweite Kabelende können an dem Verbindungsbauteil in eine jeweils zugeordnete Aufnahmeöffnung eingeführt sein. Die jeweilige Aufnahmeöffnung kann endseitig an dem Verbindungsbauteil angeordnet sein, beispielsweise im Bereich endseitiger Stirnflächen. Die Aufnahmeöffnungen können an gegenüberliegenden Endabschnitten des Verbindungsbauteils gebildet sein. Die Kabelenden können in die jeweils zugeordnete Aufnahmeöffnung eingesteckt oder eingeschoben sein, zum Beispiel durch gegenüberliegende endseitige Stirnflächen.

An den Öffnungen kann eine Einführhilfe angeordnet sein. Die Einführ- oder Einsteckhilfe kann einen die Öffnung wenigstens teilweise umgreifenden Kragen aufweisen. Die Einführhilfe kann trichterförmig und sich nach außen öffnend ausgeführt sein.

Die jeweilige Aufnahme kann eingerichtet sein, das erste und das zweite Kabelende in dem Verbindungsbauteil mittels einer Einführ- oder Montagebewegung in Längsrichtung des Verbindungsbauteils einzuführen. Mittels dieser Einführbewegung, beispielsweise zum Einstecken der Kabelenden in das Verbindungsbauteil, können die Kabelenden in einer Ausführungsform über stirnseitige Enden des Verbindungsbauteils hierin eingeführt werden. Es kann vorgesehen sein, dass die Kabelenden mittels einer Bewegung in entgegengesetzter Richtung wieder von dem Verbindungsbauteil gelöst werden können. Hierbei kann eine im Wesentlichen in Längsrichtung des Verbindungsbauteils wirkende Zugkraft angewendet werden

Die jeweilige Aufnahme kann eingerichtet sein, das erste und das zweite Kabelende in dem Verbindungsbauteil mittels einer Einführ- oder Montagebewegung quer zur Längsrichtung des Verbindungsbauteils einzuführen. Das Verbindungsbauteil kann zumindest im Bereich der jeweiligen Aufnahme im Querschnitt eine U- oder V-Form aufweisen, wobei eine längsseitige Öffnung gebildet ist, zum Beispiel in Schlitzform, durch welche hindurch das Kabelende in dem Verbindungsbauteil einführbar ist.

Die jeweilige Aufnahme kann eingerichtet sein, das erste und das zweite Kabelende mittels einer Kippbewegung relativ zur Längsrichtung des Verbindungsbauteils von dem Verbindungsbauteil wieder zu lösen. Hierbei kann die bei einer Ausführungsform an den Öffnungen des Verbindungsbauteils vorgesehene Einführhilfe die Kippbewegung begrenzend ausgebildet sein. Alternativ oder ergänzend kann vorgesehen sein, dass die Kabelenden mittels Zug in Längsrichtung des Verbindungsbauteils hieraus wieder lösbar sind. Eine Lösbarkeit mittels Kombination von Kipp- und Zugbewegung kann vorgesehen sein.

Das erste und das zweite Kabelende können jeweils einzeln von dem Verbindungsbauteil lösbar sein. Die beiden Kabelenden sind hierbei jeweils eigenständig von dem Verbindungsbauteil trennbar, ohne dass das Lösen eines der beiden Kabelenden zwingend das Lösen des anderen der beiden Kabelenden von dem Verbindungsbauteil bewirkt oder verlangt.

Das erste und das zweite Kabelende können jeweils mittels einer Klipp- oder Rastverbindung an dem Verbindungsbauteil gesichert sein. Das Verrasten kann mit dem Leiter- und / oder der Leiterisolierung stattfinden. Ergänzend oder alternativ kann ein Verrasten mit einer auf dem jeweiligen Kabelende angeordneten Aderendhülse vorgesehen sein. Im Fall des Vorsehens einer Aderendhülse kann diese alternativ rastfrei in dem Verbindungsbauteil aufgenommen sein. Ergänzend oder alternativ zum Verrasten kann ein Klemmen des Kabelendes vorgesehen sein.

Das erste und das zweite Kabelende können wenigstens im Bereich der jeweils zugeordneten Aufnahme von Wandabschnitten des Verbindungsbauteils umgriffen werden. Die Wandabschnitte können das jeweilige Kabelende umlaufend vollständig oder zum Teil umgreifend ausgebildet sein. Beim teilweisen Umgreifen können ein oder mehrere Schlitze und / oder nicht schlitzförmige Durchbrüche in den umgreifenden Wandabschnitten vorgesehen sein.

Die die Kabelenden aufnehmenden Aufnahmen an dem Verbindungsbauteil können an einen oder mehreren Tragarmen angeordnet sein, die sich von einem mittleren Abschnitt des Verbindungsbauteils ausgehend zum jeweiligen Ende hin erstrecken. In dem Verbindungsbauteil können die Kabelenden teilweise freiliegend angeordnet sein, derart, dass sie zumindest abschnittsweise von außen einsehbar sind, insbesondere durch Wanddurchbrüche hindurch.

Die Aufnahmen können eingerichtet sein, Kabelenden von konfektionierten Kabeln aufzunehmen, die unterschiedliche Leiterquerschnitte aufweisen. Hierzu kann eine elastische Aufweitung der Aufnahmen vorgesehen sein.

An dem Verbindungsbauteil kann ein Greif- oder Montageabschnitt vorgesehen sein, zum Beispiel im mittleren Bereich des Verbindungsbauteils, welcher eingerichtet ist, für ein maschinelles Aufgreifen und Halten des Verbindungsbauteils, beispielsweise im Prozess des Montierens der Kabelenden an dem Verbindungsbauteil und / oder des Lösens der Kabelenden von dem Verbindungsbauteil.

An dem Verbindungsbauteil kann ein vom Grundkörper des Verbindungsbauteils abstehender Abschnitt vorgesehen sein, zum Beispiel als Flachabschnitt, der in einer Ausführung schwertförmig ausgebildet ist. In diesem Bereich des Verbindungsbauteils und / oder einem anderen Oberflächenabschnitt des Verbindungsbauteils können Markierungs- und / oder Informationsflächen vorgesehen sein, um maschinell auslesbare Informationen anzuordnen, die beispielsweise optisch auslesbar sind. Die Informationen können Parameter der mit dem betreffenden Verbindungsbauteil verbundenen konfektionierten Kabel betreffen. Derartige Informationen können beim Herstellen der Kabelsequenz aufgebracht werden, zum Beispiel mittels Drucken. Es kann vorgesehen sein, diese Informationen beim Einsatz der Kabelsequenz zum Verdrahten auszulesen und für das Ausführen des Verdrahtungsprozesses auszuwerten, beispielsweise zum Bereitstellen von Steuersignalen.

In einer alternativen Ausführung kann das Verbindungsbauteil aus einem oder mehreren bieg- und / oder knickbaren Material bestehen, die wahlweise elastisch biegsam sein können, zum Beispiel ein Plastikmaterial, ein Papiermaterial, ein Pappmaterial, ein Gummimaterial, ein Silikonmaterial und / oder ein Folienmaterial, wobei das Verbindungsbauteil für die losen Kabelenden des ersten und des zweiten Kabelendes eine jeweilige Einstecköffnung aufweist, in welche das zugeordnete lose Kabelende selbsthaltend und lösbar einsteckbar ist, insbesondere derart, dass das eingesteckte lose Kabelende das Verbindungsbauteil durchgreift. Die selbsthaltende Befestigung, insbesondere mittels Klemmen, kann aufgrund eines Form- und / oder eines Reibschlusses ausgebildet sein. Das Verbindungsbauteil kann als ein Blatt aus dem verwendeten Material gebildet sein. Eine Streifenform kann für das Verbindungsbauteil vorgesehen sein. Das Verbindungsbauteil kann im Bereich der Einstecköffnung ein oder mehrere Schlitze aufweisen, die ein Einstecken des losen Kabelendes ermöglichen. Im Fall mehrerer Schlitze können diese sternförmig angeordnet sein. Zum Beispiel können sich die Schlitze von einem Einsteckpunkt ausgehend nach außen sternförmig erstrecken. Ein isolationsfreies Leiterende kann teilweise oder ganz durch die Einstecköffnung hindurchgesteckt sein. Im Fall eines vollständigen Hindurchsteckens kann das Verbindungsbauteil bis in den Bereich eines benachbarten Abschnitts der Leiterisolation auf das lose Kabelende geschoben sein. Eine Aderendhülse kann teilweise oder ganz durch die Einstecköffnung hindurch gesteckt sein.

Im Zusammenhang mit dem Verfahren zum Herstellen einer Kabelsequenz für eine Verdrahtung können die vorangehend in Verbindung mit der konfektionierten Kabelsequenz erläuterten Ausgestaltungen entsprechend vorgesehen sein.

In einer Ausgestaltung kann vorgesehen sein, dass bei den zunächst vereinzelt bereitgestellten konfektionierten Kabeln in der Reihenanordnung ein erstes Leiterende eines vorliegenden Kabels zumindest abschnittsweise mit einem zweiten Leiterende eines in der Kabelsequenz folgenden Kabels überlappt und die Leiterenden im Überlappungsbereich miteinander verbunden sind.

"Spezifischer Leiterquerschnitt" (LQ) in der hier verwendeten Bedeutung gibt an, dass jedes Kabel einen bestimmten Leiterquerschnitt hat, dieser jedoch auch von Kabel zu Kabel unterschiedlich sein kann. Mit anderen Worten kann die Kabelsequenz auch Kabel mit nicht identischem Leiterquerschnitt aufweisen. "Spezifische Leiterisolierung" soll bedeuten, dass sich bei den einzelnen Kabeln die Leiterisolation in Material, Dicke und Farbe unterscheiden kann.

Zumindest ein Teil der Leiter der Kabel kann als aus Einzeldrähten bestehende Litze gebildet sein.

Jedes Kabelende kann mit einer Aderendhülse versehen sein, aus der ein Endabschnitt des jeweiligen Leiterendes ragt. Der überstehende Endabschnitt kann einen Überlappungsbereich zweier aufeinander folgender Kabel definieren.

Die Kabelsequenz kann dadurch erzeugt werden, dass die Leiterenden im Überlappungsbereich ultraschallverdichtet sind. Eine Ultraschallverdichtung kann auch für Leiterenden vorgesehen sein, die in der Kabelsequenz mittels Verbindungsbauteil lösbar verbunden werden.

Es kann vorgesehen sein, dass in der Kabelsequenz Kabel mit unterschiedlichem Leitungsquerschnitt vorhanden sind. Da vereinzelte Kabel zusammengefügt werden, ist es möglich, die Kabelsequenz an verschiedenste Verdrahtungsreihenfolgen und Verdrahtungsbedingungen der elektrischen Schaltung anzupassen, wobei das Feststellen der Verdrahtungsposition softwareunterstützt ausgeführt werden kann.

So ist es bei einer Ausführung nicht erforderlich, dass die Kabelsequenz der konfektionierten Kabel mit der Verdrahtungsreihenfolge eines später zu verdrahtenden Gerätes, Schaltschrankes oder dergleichen übereinstimmt. Vielmehr kann vorgesehen sein, dass die Kabel nach Leitungsquerschnitt sortiert angeordnet sind, wobei die Kabel mit größerem Leitungsquerschnitt auf Kabel mit kleinerem Leitungsquerschnitt folgen oder Kabel mit kleinerem Leitungsquerschnitt auf Kabel mit größerem Leitungsquerschnitt folgen können, um sozusagen einen stetigen Übergang der Kabelsteifigkeit zu gewährleisten. Hierbei können die Kabel mit ihrem Leitungsquerschnitt der Größe nach in absteigender Reihenfolge verarbeitet werden, also vom größten zum kleinsten Leitungsquerschnitt hin.

Ebenso wie unterschiedliche Leitungsquerschnitte können die Kabel sich zum Beispiel farblich unterscheidende Leitungsisolierungen aufweisen. In bekannter Weise kann an den Endbereichen der Leitungsisolierung neben den abisolierten Stellen des jeweiligen Kabels eine Kennzeichnung aufgedruckt sein.

Nach einem weiteren Aspekt kann ein Verfahren zum Erzeugen und Behandeln einer vorab festgelegten Kabelsequenz aus einer Vielzahl miteinander verbundener konfektionierter Kabel mit jeweils einem ersten und einem zweiten Kabelende, das dem ersten Kabelende gegenüberliegt, wobei jedes der Kabel einen Leiter mit spezifischem Leitungsquerschnitt und eine spezifische Leiterisolierung vorgesehen sein, welches die folgenden Schritte aufweist:
- Bereitstellen einer Vielzahl auf Länge gebrachter Kabel für die Verdrahtung einer elektrischen Schaltung, wobei die Länge gegenüber der für die elektrische Schaltung erforderlichen vergrößert ist, um an wenigstens einem der Kabelenden einen Überlappungsbereich mit vorab definierter Länge vorzusehen;
- Entfernen der Leiterisolation von den Kabelenden, um den Leiter über eine vorgegebene Abisolierlänge und gegebenenfalls die Länge des Überlappungsbereiches freizulegen;
- Endbearbeiten der freigelegten Leiterenden, wobei der Überlappungsbereich unbehandelt bleibt, um konfektionierte Kabel zu erzeugen;
- Abholen der konfektionierten Kabel entsprechend der vorab festgelegten Kabelsequenz und Aneinanderfügen der Überlappungsbereiche der Leiterenden zweier in der Kabelsequenz aufeinanderfolgender Kabel;
- Verbinden der Überlappungsbereiche aufeinanderfolgender Kabel; und
- Wiederholen der Schritte des Abholens, Aneinanderfügens und Verbindens, bis die Kabelsequenz mit den konfektionierten Kabeln fertiggestellt ist.

"Aneinanderfügen der Überlappungsbereiche" gibt in der hier verwendeten Bedeutung an, dass diese beispielsweise bei massiven Leitern aneinander gelegt, gedrückt oder gepresst werden, bei aus Einzeldrähten bestehenden Litzen aber auch ineinander greifen können.

Das Verfahren kann weitere Schritte aufweisen, nämlich das Anbinden der Kabelsequenz an eine Spule und Aufspulen der Kabelsequenz für den weiteren Transport.

Um die Kabel für das Verdrahten bereitzustellen, können die Kabel durch Abschneiden oder Abscheren der verbundenen Überlappungsbereiche zweier aufeinanderfolgender Kabel derart getrennt werden, dass die für die elektrische Schaltung erforderliche Länge der Kabel eingehalten ist. Das Trennen kann von zwei Messeranordnungen im Abstand des Überlappungsbereiches, die gegenläufige Messer aufweisen, vorgenommen werden.

### Beschreibung von Ausführungsbeispielen

Im Folgenden werden weitere Ausführungsbeispiele unter Bezugnahme auf Figuren einer Zeichnung näher erläutert. Es zeigt:
Fig. 1 eine schematisierte Seitenansicht eines Kabelendes eines konfektionierten Kabels für eine Kabelsequenz,
Fig. 2 eine schematische Darstellung eines Kabelendes eines weiteren konfektionierten Kabels für eine Kabelsequenz,
Fig. 3 eine schematische Darstellung eines Übernahmegreifers für konfektionierte Kabel,
Fig. 4 eine schematische Darstellung zweier konfektionierter Kabel, die zu einem Ultraschallmodul transportiert sind,
Fig. 5 eine Ausschnittdarstellung der Fig. 4, wobei jetzt eine ultraschallkompaktierte Verbindung der beiden Kabel erfolgt ist,
Fig. 6 eine Ausführungsform einer Anordnung für das Erzeugen einer Kabelsequenz in einer Seitenansicht,
Fig. 7 eine weitere Ausführungsform einer Anordnung für das Erzeugen einer Kabelsequenz in einer Draufsicht,
Fig. 8 eine Spule zum Aufnehmen einer Kabelsequenz in einer Stirnansicht,
Fig. 9 die Spule der Fig. 8 in einer Seitenansicht,
Fig. 10 eine schematische Darstellung eines Trennmoduls,
Fig. 11 eine schematische Detailansicht der Trenneinheit des Trennmoduls aus Fig. 10,
Fig. 12 eine schematische perspektivische Darstellung eines Verbindungsbauteils zum Verbinden von Kabelenden in einer konfektionierten Kabelsequenz,
Fig. 13 eine schematische Darstellung des Verbindungsbauteils aus Fig. 12 von oben,
Fig. 14 eine schematische Darstellung des Verbindungsbauteils aus Fig. 12 von der Seite,
Fig. 15 eine schematische Darstellung des Verbindungsbauteils aus Fig. 12 von vorn,
Fig. 16 eine schematische perspektivische Darstellung eines weiteren Verbindungsbauteils zum Verbinden von Kabelenden in einer konfektionierten Kabelsequenz,
Fig. 17 eine schematische Darstellung einer Anordnung mit dem weiteren Verbindungsbauteil aus Fig. 16 sowie mehreren Kabelenden, nicht gemäß der Erfindung,
Fig. 18 eine schematische Darstellung einer Anordnung mit dem Verbindungsbauteil aus Fig. 16 und hieran angeordneten Kabelenden und
Fig. 19 eine schematische Darstellung einer Anordnung mit dem weiteren Verbindungsbauteil in einer Positionier- oder Montagehilfe.

Die Darstellungen in den Figuren sind nicht notwendigerweise maßstabsgetreu. Soweit in der nachfolgenden Beschreibung auf Verfahrens- oder Prozessschritte Bezug genommen wird, sollen diese so verstanden werden, dass sie in einer zweckmäßigen Abfolge, die auch von der beschriebenen abweichen kann, auszuführen sind.

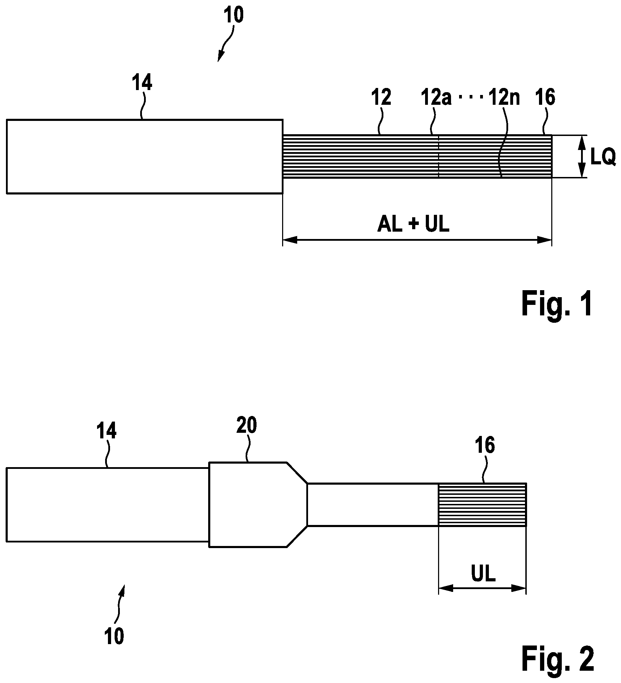

Fig. 1 zeigt eine schematische Darstellung eines ersten Kabelendes 10 eines Kabels, das einen Leiter 12 und eine diesen ummantelnde Leiterisolation 14 aufweist und das durch einen Kabelkonfektionsautomaten konfektioniert ist. Dabei ist in einem ersten Prozessschritt das Kabel auf die erforderliche Länge abgelängt worden, wobei gleichzeitig am ersten Kabelende 10 und am zweiten Kabelende (nicht gezeigt) eine in Fig. 1 nicht sichtbare Beschriftung auf der Leiterisolation 14 angebracht ist, die um eine bestimmte Länge zur Kabelmitte hin versetzt ist. Das abgelängte Kabel ist im Beispiel 10mm länger als für die Schaltung erforderlich, da, wie später noch beschrieben wird, ein Überlappungsbereich 16 an zumindest einem isolationsfreien Leiterende vorzusehen ist. Eines der Kabel am Ende der Kabelsequenz ist nur um 5mm länger, da es nur an einem Kabelende mit einem anderen Kabel verbunden wird. An diesem Kabelende ist auch die Bedruckung an der herkömmlichen Position vorgenommen. Nach dem Ablängen wird jedes Kabelende von der Leiterisolierung befreit, so dass ein erstes Leiterende am ersten Kabelende und ein zweites Leiterende am zweiten Kabelende (nicht gezeigt) isolationsfrei ist. Die Länge des isolationsfreien Leiterendes bestimmt sich nach der erforderlichen Abisolierlänge AL, verlängert um die Länge UL des Überlappungsbereiches 16, im Beispiel um 5mm. In Fig. 1 ist der Leiter 12 des Kabels als aus Einzeldrähten 12a,... 12n bestehende Litze ausgebildet.

Das konfektionierte Kabel kann in der nach Fig. 1 vorgesehenen Ausführungsform weiterverwendet werden, wobei die isolationsfreien Leiterenden unbehandelt bleiben oder, mit Ausnahme des Überlappungsbereiches 16, ultraschallkompaktiert werden oder aber, wie in Fig. 2 veranschaulicht, mit einer Aderendhülse 20 versehen werden, aus der ein Endabschnitt des Leiterendes ragt, der den Überlappungsbereich 16 dieses ersten Kabelendes 10 bildet. Die Abisolierlänge AL (vgl. Fig. 1) ist hier durch die verwendete Aderendhülse 20 vorgegeben, außerdem ist der Leitungsquerschnitt LQ des Leiters 12 zu beachten. Wenn der Leiter 12 eine Litze ist, wie im Beispiel der Fig. 1 und 2 gezeigt, ist der Überlappungsbereich 16 eine Bürste aus Einzeldrähten, die besonders gut mit einer entsprechenden Bürste eines weiteren Kabels zusammengeführt werden können, insbesondere wenn Kabel mit unterschiedlichen Leitungsquerschnitten LQ aneinandergefügt werden sollen.

Mit diesen Schritten ist das Kabel konfektioniert und kann weiter transportiert werden, um es mit einem weiteren Kabel zu verbinden. Die Übernahmeeinheit ist entsprechend dem verwendeten Kabelkonfektionsautomaten individuell gestaltet.

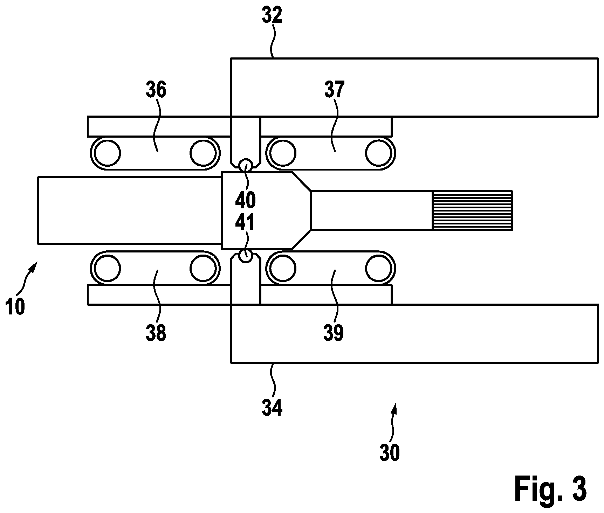

Der grundsätzliche Aufbau einer Übernahmeeinheit ist der Fig. 3 zu entnehmen, die exemplarisch eine Greifvorrichtung 30 zeigt, welche zwei einander gegenüberstehende Backen 32, 34 aufweist. An den zueinander weisenden Seiten der Backen 32, 34 sind jeweils zwei benachbarte Förderrollen 36, 37 bzw. 38, 39 vorgesehen sind, welche zwischen sich das konfektionierte Kabel, von dem in der Fig. 3 nur das erste Kabelende 10 dargestellt ist, transportieren und die daher schwimmend gelagert sind. Die Greifvorrichtung 30 ist damit so ausgelegt, dass Kabel mit unterschiedlichen Leitungsquerschnitten LQ sicher transportiert werden können. Zwischen den paarweise angeordneten Förderrollen 36 und 37 bzw. 38 und 39 ist auf jeder Seite der Greifvorrichtung 30 ein Punktgreifer 40, 41 vorgesehen, mit dessen Hilfe das Kabel aus dem Konfektionsautomaten entnommen wird, indem die Punktgreifer 40, 41 beispielsweise an der Aderendhülse 20 des ersten Kabelendes 10 angreifen. Der Kabelkonfektionsautomat kann das Kabel über ein von der Greifvorrichtung 30 erhaltenes Eingangssignal freigeben, woraufhin das Kabel dann, von den Förderrollen 36, 37 und 38, 39 gehalten, zur Weiterverarbeitung geführt wird.

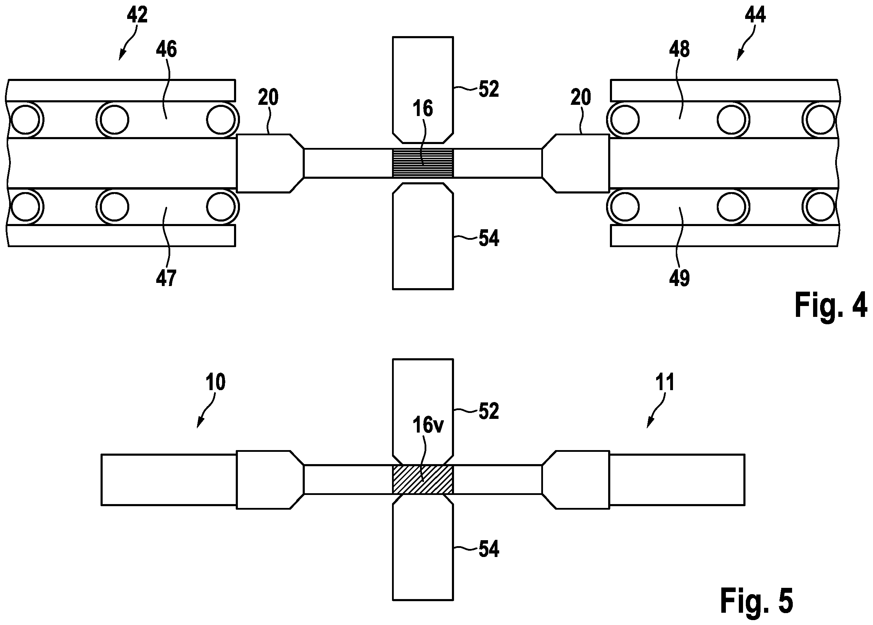

Fig. 4 zeigt in schematischer Darstellung, wie zwei konfektionierte Kabel verbunden werden. Jedes der Kabel, von denen hier nur ein erstes Kabelende 10 eines vorliegenden Kabels und ein zweites Kabelende 11 eines in der Kabelsequenz folgenden Kabels dargestellt ist, wird von einer jeweiligen Transporteinheit 42, 44 an ein Ultraschweißmodul herangeführt bzw. in der Kabelsequenz von diesem weggeführt, wobei von dem Ultraschallmodul in Fig. 4 nur zwei gegenüberstehende Schweißelektroden 52, 54 gezeigt sind. Die Transporteinheiten 42, 44 weisen schwimmend gelagerte Förderrollen, zum Beispiel 46, 47 und 48, 49 auf, um das jeweilige Kabel in die gewünschte Richtung mit der gewünschten Geschwindigkeit zu transportieren. Durch das Heranführen der Kabel aneinander werden die Bürsten bzw. Überlappungsbereiche 16 der beiden Kabel überlappt und unter die Schweißelektroden 52, 54 gebracht, woraufhin sie dann, wie in Fig. 5 zu sehen, von den Schweißelektroden 52, 54 ultraschallkompaktiert werden, so dass zwischen den beiden Kabelenden 10, 11 ein Bereich 16v mit einer stoffschlüssigen Verbindung hergestellt ist.

Obwohl in den Fig. 4 und 5 gleichartige Kabel mit gleichen Leitungsquerschnitten und gleicher Endbearbeitung gezeigt sind, versteht es sich, dass auch Kabel mit unterschiedlichen Leitungsquerschnitten und unterschiedlicher Endbearbeitung zum Erzeugen des Bereiches 16v mit der stoffschlüssigen Verbindung zusammengeführt werden können.

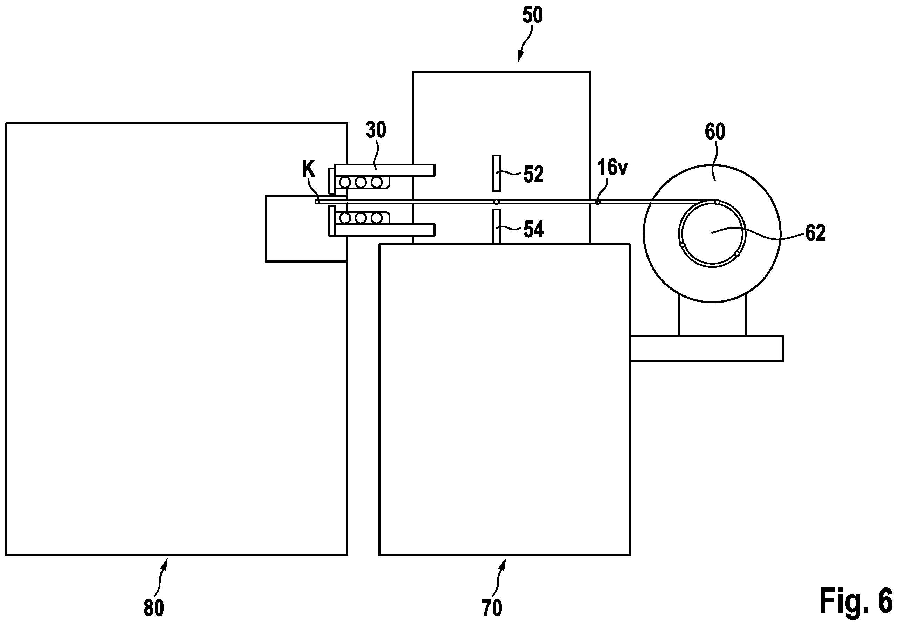

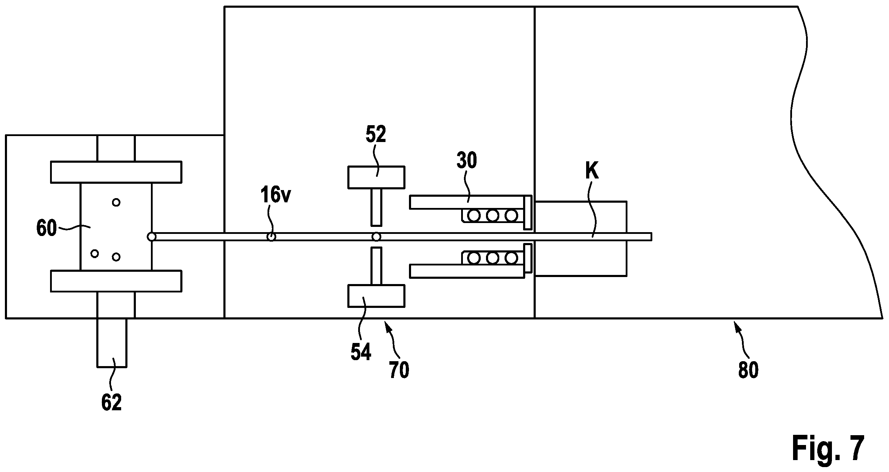

Die miteinander verbundenen Kabel K können dann auf eine Spule 60 mit einem zusätzlichen Antrieb 62 aufgespult werden. Spule 60 mit Antrieb 62 transportieren die Kabelsequenz aus dem Ultraschweißmodul 50 heraus, nachdem mit Hilfe der Schweißelektroden 52, 54 die Bereiche 16v mit der stoffschlüssigen Verbindung zwischen den einzelnen von der Greifvorrichtung 30 herangeförderten Kabeln K, die in dem Konfektionsautomaten 80 bereitgestellt worden sind, erzeugt worden sind. Die Spule 60 kann Bestandteil eines Leitungsverbindungsmoduls 70 sein, das zusammen mit dem Kabelkonfektionsautomaten 80, in Fig. 6 in einer Seitenansicht dargestellt ist. Die mit der Kabelsequenz bewickelte Spule 60 kann auch manuell oder automatisiert an das Leitungsverbindungsmodul 70 herangebracht werden. Fig. 7 zeigt eine Variante, bei der auch die Greifvorrichtung 30 Bestandteil des Leitungsverbindungsmoduls 70 ist und nicht, wie in Fig. 6, dem Kabelkonfektionsautomaten 80 zugeordnet ist.

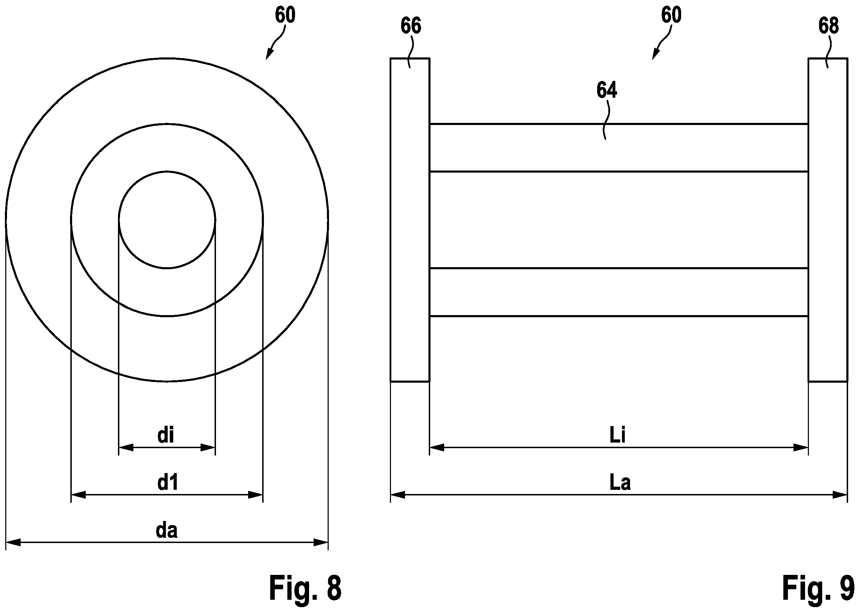

Die Spule 60 ist in den Fig. 8 und 9 in ihren Abmessungen näher veranschaulicht. Die Stirnansicht der Fig. 8 zeigt für die Spule 60 einen Innendurchmesser di, über den der Antrieb 62 die Spule 60 dreht und die Kabelsequenz auf die Spule 60 wickelt. Die Kabelsequenz liegt anfangs auf dem Durchmesser d1. Hier ist eine Hilfsleitung angebracht, an der für die Verbindung an der Spule 60 die Kabelsequenz befestigt wird. Wenn die Spule 60 als Mehrwegspule gehandhabt werden soll, wird die Hilfsleitung nach jeder Verwendung gekürzt, bis sie schlussendlich gegen eine neue Hilfsleitung ausgetauscht werden muss. Die Spule 60 kann bis zum Außendurchmesser da gewickelt werden, wobei die Länge der unterzubringenden Kabelsequenz im Wesentlichen durch die von Spulenflanschen 66, 68 begrenzte Länge Li des Spulenkörpers 64 limitiert ist. Die Spulenflansche 66, 68 verhindern, dass die Kabelsequenz versehentlich von der Spule 60 abrutscht. Die Gesamtspulenlänge La setzt sich aus der Länge Li sowie der Breite der Spulenflansche 66, 68 zusammen.

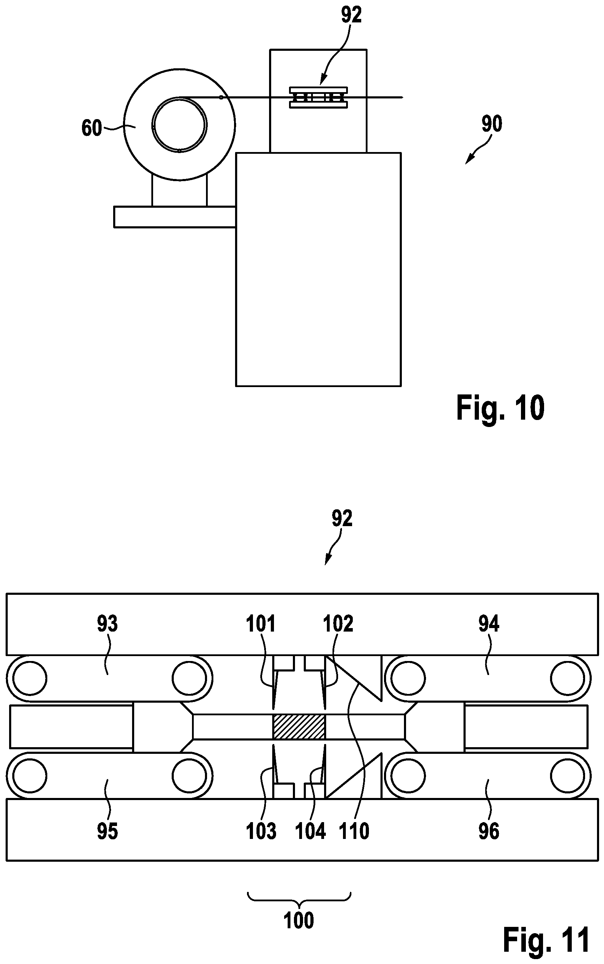

Ist die Spule 60 mit der Kabelsequenz versehen, kann sie entweder mit einem wiederbeschreibbaren RFID-Transponder oder einem QR-Code bzw. Barcode gekennzeichnet werden. Die Information über die Montagereihenfolge werden dem Kabelkonfektionsautomaten 80 entnommen und für ein Trennmodul 90 bereitgestellt, das an der Schaltanlage vorgesehen ist und mit Bezug auf die Fig. 10 und 11 beschrieben wird.

Wie in der Fig. 10 gezeigt, wird die Spule 60 an das Trennmodul 90 herangeführt. Anschließend wird das erste Kabel der Kabelsequenz in eine Trenneinheit 92 des Trennmoduls 90 eingeführt, die in Fig. 11 in Einzelheiten gezeigt ist. Sobald das erste Kabel in die Trenneinheit 92 eingebracht ist, wird der von dem Kabelkonfektionsautomaten 80 gelieferte elektronische Datensatz in das Trennmodul 90 geladen. Durch diesen Datensatz ist der Software bekannt, in welcher Reihenfolge die Kabel angeordnet sind, welche Länge jedes Kabel besitzt, wie die Aderendbehandlung ausgeführt ist und an welcher Stelle ein Trennschritt gesetzt werden muss. Um einen exakten Startpunkt zu ermitteln, muss das Modul 90 über einen (nicht dargestellten) Sensor den Anfang des Kabels erfassen. Dies erfolgt voll automatisch.

Da unterschiedliche Querschnitte mit Aderendhülsen oder ohne solche, sowie unterschiedliche Leitungstypen mit unterschiedlichen Isolationsmaterialien verwendet werden, muss die Förderung, bestehend aus Förderrollen 93, 94 und 95, 96 spielend gelagert sein. Das Kabel wird dann mit seiner Verbindungsstelle 16v zu einer Messeranordnung 100 gefördert. In Bezug auf diese Messeranordnung 100 muss die Verbindungsstelle 16v zweier Kabel zwischen gegenläufigen Messern 101, 103 und 102, 104, beispielsweise V-Messern, mit einem Abstand, der der Länge UL des Überlappungsbereiches 16 entspricht, über Sensorik 110 ausgerichtet werden. Dann trennen die Messer 101, 103 und 102, 104 die Verbindungsstelle 16v vollständig heraus, und das wieder vereinzelte Kabel kann entnommen und verarbeitet werden. Die Trennung wird dabei so durchgeführt, dass die exakt erforderliche Länge des Kabels wieder vorhanden ist. Im Fall des Verwendens von Aderendhülsen 20 (Fig. 2) schließt nach der Trennung die Litze wieder bündig mit der Aderendhülse 20 ab. Um nun das nächste Kabel abzutrennen, wird dessen führendes Kabelende weiter gefördert und durch die Sensorik 110 differenziert. Nun wird der beschriebene Trennvorgang wiederholt, bis alle Kabel der Kabelsequenz vollständig verarbeitet sind.

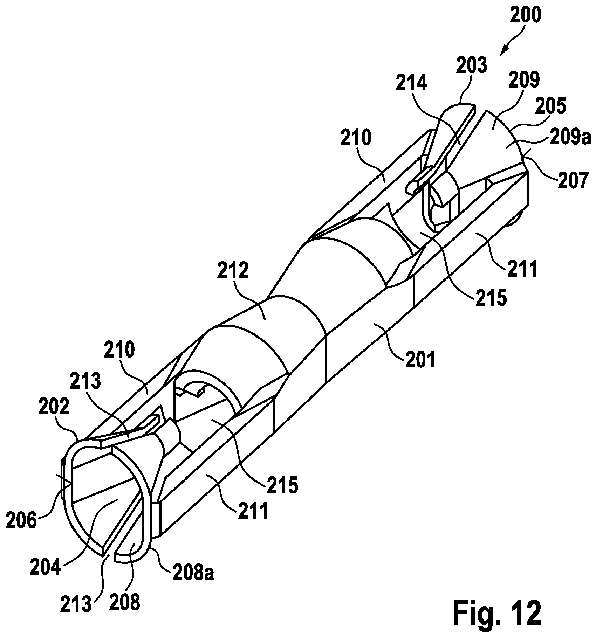

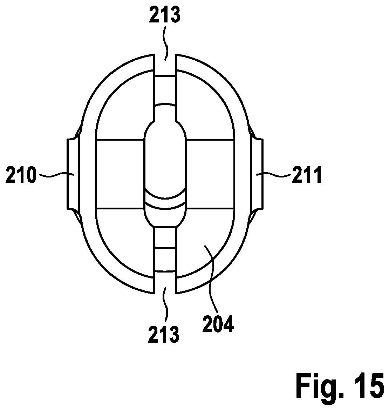

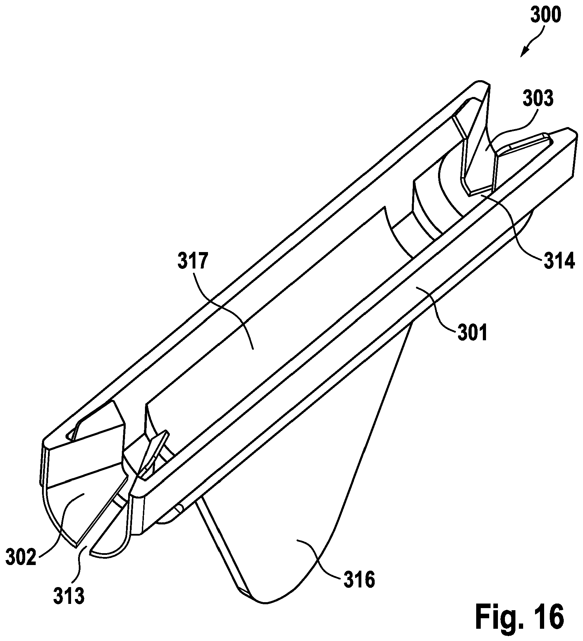

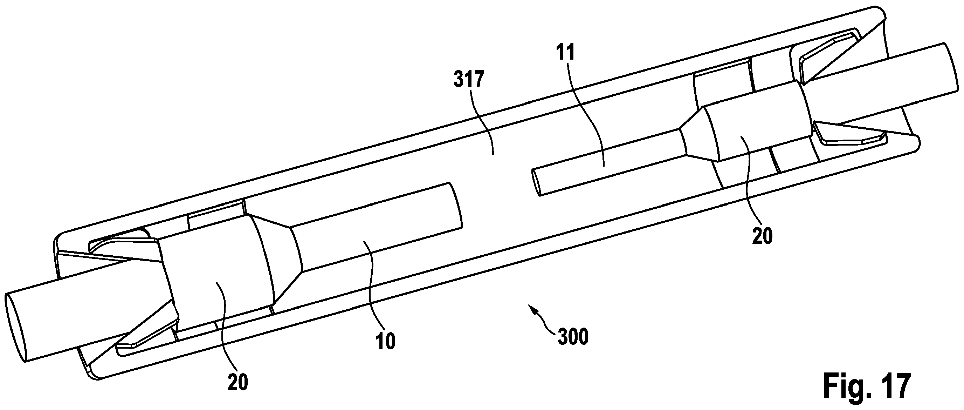

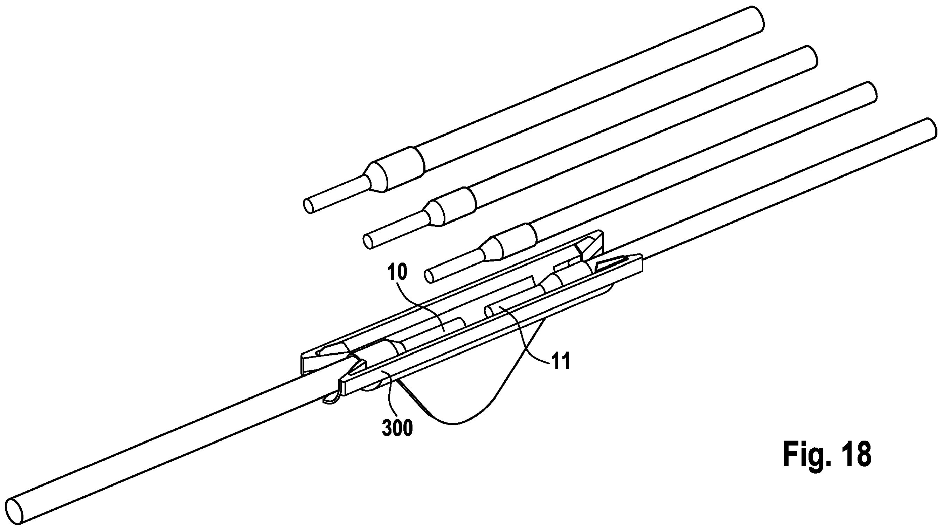

Bei der vorangehend beschriebenen Ausführungsformen ist vorgesehen, die in der Kabelsequenz einander gegenüberliegenden Kabelenden 10, 11 der konfektionierten Kabel mittels nicht lösbar miteinander zu verbinden, insbesondere mittels Ultraschallanwendung. Nachfolgend werden unter Bezugnahme auf die Fig. 12ff. Ausführungsformen beschrieben, bei denen die Kabelenden 10, 11 beim Herstellen der konfektionierten Kabelsequenz lösbar miteinander verbunden werden, wobei ein Verbindungsbauteil 200 gemäß den Fig. 12 bis 15 oder ein weiteres Verbindungsbauteil 300 gemäß der Ausführung in den Fig. 16 bis 19 zum Ausbilden der Verbindung zwischen den Kabelenden 10, 11 zum Einsatz kommt. Im Übrigen können die vorangehend unter Bezugnahme auf die Fig. 1 bis 12 erläuterten Ausgestaltungen im Zusammenhang mit den nachfolgend beschriebenen Ausführungen entsprechend vorgesehen sein.

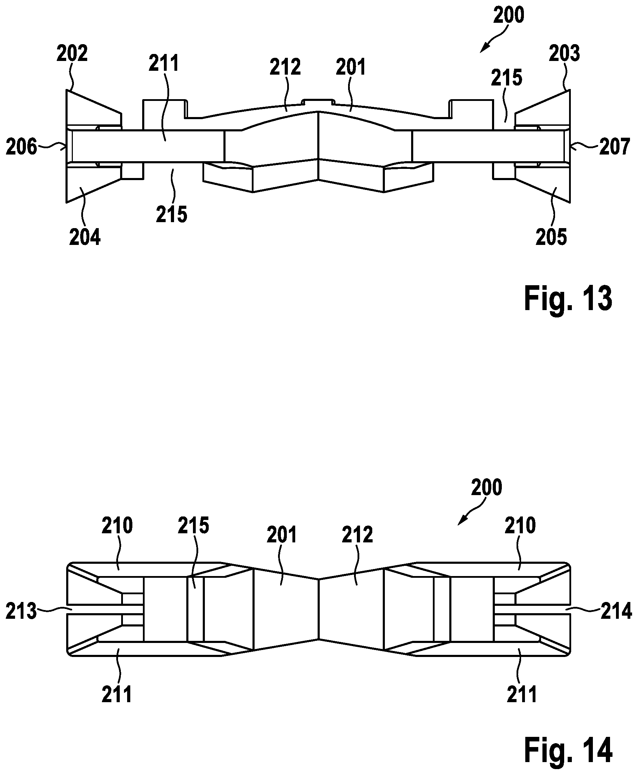

Fig. 12 zeigt eine perspektivische Darstellung des Verbindungsbauteils 200. Die Fig. 13 bis 15 zeigen Darstellungen des Verbindungsbauteils 200 von oben, von der Seite und von vorn. Das Verbindungsbauteil 200 weist einen Grundkörper 201 auf, an dem an entgegengesetzten Enden 202, 203 eine jeweilige Aufnahme 204, 205 für eines der Kabelenden 10, 11 vorgesehen ist. Die Aufnahmen 204, 205 sind bei der dargestellten Ausführungsform als Steckaufnahme ausgeführt, derart, dass die Kabelenden beim Herstellen der Kabelsequenz zum Verbinden der zuvor vereinzelt hergestellten konfektionierten Kabel in Längsrichtung des Verbindungsbauteil 200 über stirnseitige Seitenflächen 206, 207 durch eine Einführ- oder Montagehilfe 208, 209 hindurch eingesteckt werden. Die Einführhilfe 208, 209 ist mit einem umlaufenden Kragen 208a, 209a gebildet, der in der dargestellten Ausführungsform trichterförmig ausgeführt ist.

Die Aufnahmen 204, 205 sind am Grundkörper 201 mittels Tragarmen 210, 211 gehalten. Die Tragarme 210, 211 gehen von einem mittleren Abschnitt 212 aus, der als Greif- und Halteabschnitt ausgeführt ist, so dass das Verbindungsbauteil 200 maschinell gegriffen und gehalten werden kann.

Im Bereich der Einführhilfen 208, 209 sind Schlitze 213, 214 gebildet, die in Längsrichtung des Verbindungsbauteils 200 verlaufen, wodurch beim Einstecken des jeweiligen Kabelendes in begrenztem Umfang ein elastisches Aufweiten der das Kabelende aufnehmenden Aufnahme 204, 205 ermöglicht ist. Auf diese Weise ist die Aufnahme 204, 205 eingerichtet, Kabelenden von konfektionierten Kabeln aufzunehmen, die unterschiedliche Querschnitte aufweisen.

Das Verbindungsbauteil 200 ist eingerichtet, Kabelenden beim Herstellen der Kabelsequenz aufzunehmen, die über eine Aderendhülse 20 verfügen (vgl. Fig. 2 oben).

Das Verbindungsbauteil 200 weist am Grundkörper 201 Durchbrüche 215 auf, durch die ein eingestecktes Kabelende zumindest zum Teil von außen einsehbar ist.

In den Fig. 16 bis 19 ist ein weiteres Verbindungsbauteil 300 gezeigt, welches vergleichbar dem Verbindungsbauteil 200 zum lösbaren Verbinden der Kabelenden 10, 11 beim Ausbilden der Kabelsequenz nutzbar ist. Am Grundkörper 301 sind Aufnahmen 302, 303 gebildet, in die die aufzunehmenden Kabelenden lösbar eingesteckt werden können, wobei insbesondere Kabelenden mit einer Aderendhülse 20 in den Aufnahmen 302, 303 verrasten können, wie dies auch bei dem Verbindungsbauteil 200 vorgesehen sein kann. Im Bereich der Aufnahmen 302, 303 ist ein U-förmiger Querschnitt gebildet, welcher es ermöglicht, die Kabelenden auch in einer Einführrichtung quer zur Längsrichtung des Verbindungsbauteils 300 in die Aufnahmen 302, 303 einzuführen.

Bei dem weiteren Verbindungsbauteil 300 sind Einführhilfen 308, 309 vorgesehen, die trichterförmig und mit einem Schlitz 313, 314 ausgeführt sind. Weiterhin weist das weitere Verbindungsbauteil 300 einen flachen, abstehenden Abschnitt 316 auf, der in der gezeigten Darstellung schwertförmig ausgebildet ist.

Zwischen den Aufnahmen 302, 303 erstreckt sich einen rinnenförmiger Abschnitt 317.

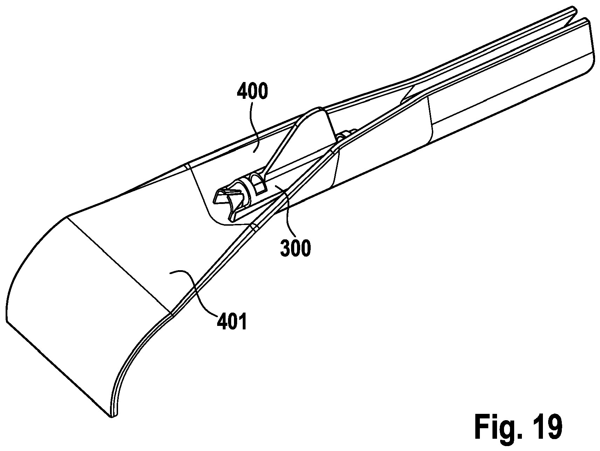

Fig. 19 zeigt eine Anordnung, bei der das weitere Verbindungsbauteil 300 in einer Positionier- oder Montagehilfe 400 angeordnet ist. Beim Herstellen der konfektionierten Kabelsequenz ist das weiteren Verbindungsbauteil 300 so positioniert, um das hierin einzubringende Kabelende hieran zu montieren. Eine Rampe 401 kann als Einführhilfe dienen.

## Patentansprüche

1. Kabelsequenz für eine Verdrahtung einer elektrischen Schaltung, mit:
- einer Reihenanordnung einer Vielzahl konfektionierter Kabel, die jeweils ein erstes und ein zweites Kabelende (10, 11), das dem ersten Kabelende (10) gegenüber liegt, aufweisen, wobei jedes der konfektionierten Kabel einen Leiter (12) und eine Leiterisolierung (14) aufweist und wobei die Kabelenden (10, 11) für die Verdrahtung einer elektrischen Schaltung bearbeitet sind, derart, dass ein jeweiliges Leiterende am ersten Kabelende (10) und am zweiten Kabelende (11) isolationsfrei ist, und
- Verbindungen zwischen in der Reihenanordnung benachbart zueinander angeordneten konfektionierten Kabeln,
wobei mittels der Verbindungen jeweils ein zuvor als loses Kabelende hergestelltes erstes Kabelende (10) eines konfektionierten Kabels und ein zuvor als loses Kabelende hergestelltes zweites Kabelende (11) eines in der Reihenanordnung hierauf folgenden konfektionierten Kabels miteinander verbunden sind, **dadurch gekennzeichnet, dass** in der Verbindung das erste und das zweite Kabelende (10, 11) in Längsrichtung der Kabel einander überlappend angeordnet sind.

2. Kabelsequenz nach Anspruch 1, **dadurch gekennzeichnet, dass** das erste und das zweite Kabelende (10, 11) mittels der Verbindung lösbar miteinander verbunden sind.

3. Kabelsequenz nach mindestens einem der vorangehenden Ansprüche, **dadurch gekennzeichnet, dass** das erste und das zweite Kabelende (10, 11) in der Verbindung mittels eines Verbindungsbauteils (200; 300) miteinander verbunden sind, an welchem das erste und das zweite Kabelende (10, 11) in einer jeweils zugeordneten Aufnahme angeordnet sind.

4. Kabelsequenz nach Anspruch 3, **dadurch gekennzeichnet, dass** das Verbindungsbauteil (200; 300) ein wiederverwendbares Mehrwegbauteil ist.

5. Kabelsequenz nach Anspruch 3 oder 4, **dadurch gekennzeichnet, dass** das erste und das zweite Kabelende (10, 11) an dem Verbindungsbauteil (200; 300) in eine jeweils zugeordnete Aufnahmeöffnung eingeführt sind.

6. Kabelsequenz nach Anspruch 5, **dadurch gekennzeichnet, dass** an den Öffnungen eine Einführhilfe angeordnet ist.

7. Kabelsequenz nach mindestens einem der Ansprüche 3 bis 6, **dadurch gekennzeichnet, dass** die jeweilige Aufnahme eingerichtet ist, das erste und das zweite Kabelende (10, 11) in dem Verbindungsbauteil (200; 300) mittels einer Einführbewegung in Längsrichtung des Verbindungsbauteils (200; 300) einzuführen.

8. Kabelsequenz nach mindestens einem der Ansprüche 3 bis 7, **dadurch gekennzeichnet, dass** die jeweilige Aufnahme eingerichtet ist, das erste und das zweite Kabelende (10, 11) in dem Verbindungsbauteil (200; 300) mittels einer Einführbewegung quer zur Längsrichtung des Verbindungsbauteils (200; 300) einzuführen.

9. Kabelsequenz nach mindestens einem der Ansprüche 3 bis 8, **dadurch gekennzeichnet, dass** die jeweilige Aufnahme eingerichtet ist, das erste und das zweite Kabelende (10, 11) mittels Kippbewegung relativ zur Längsrichtung des Verbindungsbauteils (200; 300) von dem Verbindungsbauteil (200; 300) wieder zu lösen.

10. Kabelsequenz nach mindestens einem der Ansprüche 3 bis 9, **dadurch gekennzeichnet, dass** das erste und das zweite Kabelende (10, 11) jeweils einzeln von dem Verbindungsbauteil (200; 300) lösbar sind.

11. Kabelsequenz nach mindestens einem der Ansprüche 3 bis 10, **dadurch gekennzeichnet, dass** das erste und das zweite Kabelende (10, 11) jeweils mittels einer Klipp- oder Rastverbindung an dem Verbindungsbauteil (200; 300) gesichert sind.

12. Kabelsequenz nach mindestens einem der Ansprüche 3 bis 11, **dadurch gekennzeichnet, dass** das erste und das zweite Kabelende (10, 11) wenigstens im Bereich der jeweils zugeordneten Aufnahme von Wandabschnitten des Verbindungsbauteils (200; 300) umgriffen werden.

13. Verfahren zum Herstellen einer Kabelsequenz für eine Verdrahtung einer elektrischen Schaltung, wobei das Verfahren die folgenden Schritte aufweist:
- Bereitstellen einer Vielzahl vereinzelter konfektionierter Kabel, die jeweils ein erstes und ein zweites Kabelende (10, 11), das dem ersten Kabelende (10) gegenüber liegt, aufweisen, wobei jedes der konfektionierten Kabel einen Leiter (12) und eine Leiterisolierung (14) aufweist und wobei die Kabelenden (10, 11) für die Verdrahtung einer elektrischen Schaltung bearbeitet sind, derart, dass ein jeweiliges Leiterende am ersten Kabelende (10) und am zweiten Kabelende (11) isolationsfrei ist, und
- Herstellen einer Kabelsequenz mit einer Reihenanordnung von konfektionierten Kabeln aus der Vielzahl vereinzelter konfektionierter Kabel, indem Verbindungen zwischen in der Reihenanordnung benachbart zueinander angeordneten konfektionierten Kabeln hergestellt werden, derart, dass mittels der Verbindungen jeweils ein zuvor als loses Kabelende hergestelltes erstes Kabelende (10) eines konfektionierten Kabels und ein zuvor als loses Kabelende hergestelltes zweites Kabelende (11) eines in der Reihenanordnung hierauf folgenden konfektionierten Kabels in Längsrichtung der Kabel einander überlappend miteinander verbunden werden.

14. Verwendung einer Kabelsequenz nach mindestens einem der Ansprüche 1 bis 12 zum Verdrahten einer elektrischen Schaltung, wobei hierbei die Verbindungen zwischen den benachbarten konfektionierten Kabeln in der Reihenanordnung getrennt werden und die elektrische Schaltung mit den getrennten konfektionierten Kabeln verdrahtet wird.

## Claims

1. A cable sequence for wiring of an electrical circuit, with:
- a series arrangement of a plurality of pre-assembled cables, each of which comprises a first cable end and a second cable end (10, 11) which lies opposite the first cable end (10), wherein each of the pre-assembled cables comprises a conductor (12) and a conductor insulation (14), and wherein the cable ends (10, 11) are processed for the wiring of an electrical circuit in such a manner that a respective conductor end is insulation-free at the first cable end (10) and at the second cable end (11), and
- connections between adjacently arranged pre-assembled cables in the series arrangement,
wherein, by means of the connections, in each case a first cable end (10) of a pre-assembled cable, produced beforehand as free cable end, and a second cable end (11) of a next pre-assembled cable in the series arrangement, produced beforehand as free cable end, are connected to one another, **characterized in that** the first cable end and the second cable end (10, 11) overlap one another in longitudinal direction of the cables.

2. The cable sequence according to Claim 1, **characterized in that** the first cable end and the second cable end (10, 11) are detachably connected to one another by means of the connection.

3. The cable sequence according to at least one of the preceding claims, **characterized in that** the first cable end and the second cable end (10, 11) are connected to one another in the connection by means of a connection component (200; 300), on which the first cable end and the second cable end (10, 11) are arranged in a respective associated receptacle.

4. The cable sequence according to Claim 3, **characterized in that** the connection component (200; 300) is a reusable component.

5. The cable sequence according to Claim 3 or 4, **characterized in that** the first cable end and the second cable end (10, 11) are introduced into a respective associated receiving opening on the connection component (200; 300).

6. The cable sequence according to Claim 5, **characterized in that** an introduction aid is arranged on the openings.

7. The cable sequence according to at least one of Claims 3 to 6, **characterized in that** the respective receptacle is arranged for introducing the first cable end and the second cable end (10, 11) in the connection component (200; 300) by means of an introduction movement in longitudinal direction of the connection component (200; 300).

8. The cable sequence according to at least one of Claims 3 to 7, **characterized in that** the respective receptacle is arranged for introducing the first cable end and the second cable end (10, 11) in the connection component (200; 300) by means of an introduction movement transversely to the longitudinal direction of the connection component (200; 300).

9. The cable sequence according to at least one of Claims 3 to 8, **characterized in that** the respective receptacle is arranged for detaching the first cable end and the second cable end (10, 11) from the connection component (200; 300) by means of a tipping movement relative to the longitudinal direction of the connection component (200; 300).

10. The cable sequence according to at least one of Claims 3 to 9, **characterized in that** the first cable end and the second cable end (10, 11) are each individually detachable from the connection component (200; 300).

11. The cable sequence according to at least one of Claims 3 to 10, **characterized in that** the first cable end and the second cable end (10, 11) are each secured on the connection component (200; 300) by means of a clip or snap-on connection.

12. The cable sequence according to at least one of Claims 3 to 11, **characterized in that** the first cable end and the second cable end (10, 11) are enclosed at least in the area of the respective associated receptacle by wall sections of the connection component (200; 300).

13. A method for producing a cable sequence for wiring of an electrical circuit, wherein the method comprises the following steps:
- providing of a plurality of individual pre-assembled cables each of which has a first cable end and a second cable end (10, 11) which lies opposite the first cable end (10), wherein each of the pre-assembled cables has a conductor (12) and a conductor insulation (14), and wherein the cable ends (10, 11) for the wiring of an electrical circuit are processed in such a manner that a respective conductor end is insulation-free at the first cable end (10) and at the second cable end (11), and
- producing of a cable sequence with a series arrangement of preassembled cables from the plurality of individual preassembled cables, in that connections are produced between adjacently arranged pre-assembled cables in the series arrangement in such a manner that, by means of the connections, in each case a first cable end (10) of a pre-assembled cable, produced beforehand as free cable end, and a second cable end (11) of a next pre-assembled cable in the series arrangement, produced beforehand as free cable end, are overlappingly connected to one another in longitudinal direction of the cables.

14. Use of a cable sequence according to at least one of Claims 1 to 12 for the wiring of an electrical circuit, wherein the connections between the adjacent pre-assembled cables in the series arrangement are separated, and the electrical circuit is wired with the separated pre-assembled cables.

## Revendications

1. Séquence de câbles pour un câblage d'un circuit électrique, avec :
- une disposition en série d'une pluralité de câble confectionnés, qui comprennent chacun une première et une deuxième extrémité de câble (10, 11), opposée à la première extrémité de câble (10), chacun des câbles confectionnés comprenant un conducteur (12) et une isolation de conducteur (14) et les extrémités des câbles (10, 11) étant traitées pour le câblage d'un circuit électrique, de façon à ce qu'une extrémité de conducteur soit dénudée au niveau de la première extrémité de câble (10) et de la deuxième extrémité de câble (11) et
- liaison entre des câbles confectionnés disposés de manière adjacente entre eux dans la disposition en série,
les liaisons permettant de relier entre elles une première extrémité de câble (10), auparavant fabriquée comme une extrémité de câble libre, d'un câble confectionné et une deuxième extrémité de câble (11), auparavant fabriquée comme une extrémité de câble libre, d'un câble confectionné le suivant dans la disposition en série, **caractérisée en ce que**, dans la liaison, la première et la deuxième extrémités de câbles (10, 11) sont disposées de façon superposée dans la direction longitudinale des câbles.

2. Séquence de câbles selon la revendication 1, **caractérisée en ce que** la première et la deuxième extrémités de câbles (10, 11) sont reliées entre elles de manière amovible au moyen de la liaison.

3. Séquence de câbles selon au moins l'une des revendications précédentes, **caractérisée en ce que** la première et la deuxième extrémités de câbles (10, 11) sont reliées entre elles dans la liaison au moyen d'un composant de liaison (200 ; 300), au niveau duquel la première et la deuxième extrémités de câbles (10, 11) sont disposées dans un logement correspondant.

4. Séquence de câbles selon la revendication 3, **caractérisée en ce que** le composant de liaison (200 ; 300) est un composant réutilisable.

5. Séquence de câbles selon la revendication 3 ou 4, **caractérisée en ce que** la première et la deuxième extrémités de câbles (10, 11) sont introduites dans le composant de liaison (200 ; 300) dans une ouverture de logement correspondante.

6. Séquence de câbles selon la revendication 5, **caractérisée en ce qu'**une aide à l'introduction est disposée au niveau des ouvertures.

7. Séquence de câbles selon l'une des revendications 3 à 6, **caractérisée en ce que** le logement correspondant est conçu pour introduire la première et la deuxième extrémités de câbles (10, 11) dans le composant de liaison (200 ; 300) au moyen d'un mouvement d'introduction dans la direction longitudinale du composant de liaison (200 ; 300).

8. Séquence de câbles selon l'une des revendications 3 à 7, **caractérisée en ce que** le logement correspondant est conçu pour introduire la première et la deuxième extrémités de câbles (10, 11) dans le composant de liaison (200 ; 300) au moyen d'un mouvement d'introduction transversal par rapport à la direction longitudinale du composant de liaison (200 ; 300).

9. Séquence de câbles selon l'une des revendications 3 à 8, **caractérisée en ce que** le logement correspondant est conçu pour détacher de nouveau la première et la deuxième extrémités de câbles (10, 11) du composant de liaison (200 ; 300) au moyen d'un mouvement de basculement par rapport à la direction longitudinale du composant de liaison (200 ; 300).

10. Séquence de câbles selon l'une des revendications 3 à 9, **caractérisée en ce que** la première et la deuxième extrémités de câbles (10, 11) peuvent chacune être détachées individuellement du composant de liaison (200 ; 300).

11. Séquence de câbles selon l'une des revendications 3 à 10, **caractérisée en ce que** la première et la deuxième extrémités de câbles (10, 11) sont chacune fixées au moyen d'une liaison pas clipsage ou par encliquetage au composant de liaison (200 ; 300).

12. Séquence de câbles selon l'une des revendications 3 à 11, **caractérisée en ce que** la première et la deuxième extrémités de câbles (10, 11) sont entourées, au moins au niveau du logement correspondant, par des portions de parois du composant de liaison (200 ; 300).

13. Procédé de fabrication d'une séquence de câbles pour un câblage d'un circuit électrique, ce procédé comprenant les étapes suivantes :
- mise à disposition d'une pluralité de câbles confectionnés séparés, qui comprennent chacun une première et une deuxième extrémité de câble (10, 11), opposée à la première extrémité de câble (10), chacun des câbles confectionnés comprenant un conducteur (12) et une isolation de conducteur (14) et les extrémités des câbles (10, 11) étant traitées pour le câblage d'un circuit électrique, de façon à ce qu'une extrémité de conducteur soit dénudée au niveau de la première extrémité de câble (10) et de la deuxième extrémité de câble (11) et
- fabrication d'une séquence de câbles avec une disposition en série de câbles confectionnés parmi la pluralité de câbles confectionnés, grâce au fait que les liaisons entre des câbles confectionnés disposés de manière adjacente entre eux sont établies de façon à ce que les liaisons permettent de relier entre elles une première extrémité de câble (10), auparavant fabriquée comme une extrémité de câble libre, d'un câble confectionné et une deuxième extrémité de câble (11), auparavant fabriquée comme une extrémité de câble libre, d'un câble confectionné le suivant dans la disposition en série, **caractérisée en ce que**, dans la liaison, la première et la deuxième extrémités de câbles (10, 11) sont disposées de façon superposée dans la direction longitudinale des câbles.

14. Utilisation d'une séquence de câbles selon au moins l'une des revendications 1 à 12 pour le câblage d'un circuit électrique, les liaisons entre les câbles confectionnés adjacents dans la disposition en série étant séparées et le circuit électrique étant câblé avec les câbles confectionnés séparés.
